# EUROPEAN PATENT APPLICATION

(11) **EP 1 667 291 A2**
(43) Date of publication of application: **07.06.2006**
(21) Application number: 05024919.2
(22) Date of filing: 15.11.2005
(51) Int. Cl.: H01S 3/097

(54) **Gas laser oscillator**

(30) Priority: 29.11.2004 JP 2004343777
(71) Applicant: FANUC LTD, Minamitsuru-gun, Yamanashi 401-0597 (JP)
(72) Inventor: Egawa, Akira, Gotenba-shi Shizuoka 412-0043 (JP); Ando, Minoru Room 6-207, Minamitsuru-gun Yamanashi 401-0511 (JP); Mori, Atsushi, Minamitsuru-gun Yamanashi 401-0301 (JP)
(74) Representative: Thum, Bernhard

(57) **Abstract**

A gas laser oscillator (10) provided with voltage detecting means (4a to 4d) for detecting the voltage of each of a plurality of discharge tube segments (6a to 6d) of a discharge tube before start of discharge and a discharge tube segment start judging means (1) for judging if each of the plurality of discharge tube segments (6a to 6d) has started based on the voltage of the discharge tube segments (6a to 6d) detected by the voltage detecting means (4a to 4d), wherein the discharge tube segment start judging means (1) allows all of the plurality of discharge tube segments (6a to 6d) to start only when the voltages of all of the discharge tube segments (6a to 6d) of the plurality of discharge tube segments are smaller than a predetermined voltage (Vb) is provided. Due to this, it is possible to judge an abnormality in the laser gas before the start of discharge without any work on the part of the operator and thereby prevent the discharge tube from being damaged.

## Description

### BACKGROUND OF THE INVENTION

### 1. Field of the Invention

The present invention relates to a gas laser oscillator, more particularly relates to a gas laser oscillator used in a laser processing machine.

### 2. Description of the Related Art

A general gas laser oscillator, for example, the gas laser oscillator disclosed in Japanese Unexamined Patent Publication No. 7-221378, excites laser gas sealed in a discharge tube by the discharge energy between discharge electrodes so as to emit a laser beam of an oscillation wavelength corresponding to the amount of energy discharged when the gas ions in the excited state return to the base state or the normal state.

However, if stopping a gas laser oscillator for a long time, if the source (tank) of the laser gas supplied to the discharge tube is empty, if the inside of the gas laser oscillator is opened up to the atmosphere, etc., the lubrication oil of the blower used for circulating the laser gas in the discharge tube, that is, the turboblower, will be evaporated and will become mixed into the laser gas in the discharge tube. When the amount of the evaporated lubrication oil is large, sometimes part of the lubrication oil may stick to the inside walls of the discharge tube. In such a case, the laser gas will have impurity molecules, that is, molecules of the lubrication oil, mixed into it and therefore the laser gas will deteriorate. If operating a gas laser oscillator in the state with the laser gas deteriorated, the discharge will become hard to start and the discharge voltage at the time of start of discharge will rise greatly compared with when the laser gas is not deteriorated. This rise in the discharge voltage may cause insulation breakdown to occur outside of the discharge tube and the discharge tube to be damaged. In particular, in recent years, the outputs of laser oscillators have increased as a general tendency, so the possibility of discharge tubes being damaged has been rising.

Usually, when lubrication oil becomes mixed in the laser gas of a discharge tube, the laser gas is replaced so as to exhaust the impurity molecules, for example, the lubrication oil, from the inside of the discharge tube. The discharge tube is filled with only fresh laser gas and then a warmup operation is conducted. However, whether laser gas has deteriorated must be judged by the operator himself, so there is a large burden placed on the operator. Further, the time and effort required for the operator to replace the laser gas are also too great to be ignored.

Further, the gas laser oscillator disclosed in Japanese Unexamined Patent Publication No. 7-221378 judges that the discharge load, that is, the laser gas in the laser head, is abnormal when the start of discharge is not detected under predetermined conditions and when the start of discharge is detected outside of the predetermined conditions. In the laser oscillator disclosed in Japanese Unexamined Patent Publication No. 7-221378, abnormalities of the laser gas can be judged, but a high voltage is already being applied before an abnormality is judged, so it is difficult to prevent damage to the discharge tube which might occur before the start of discharge.

An object of the present invention is to provide a gas laser oscillator which can judge an abnormality in the laser gas before the start of discharge without any work on the part of the operator and thereby prevent the discharge tube from being damaged.

### SUMMARY OF THE INVENTION

To realize this object, according to a first aspect of the invention, there is provided a gas laser oscillator provided with voltage detecting means for detecting the voltage of each of a plurality of discharge tube segments of a discharge tube before start of discharge and a discharge tube segment start judging means for judging if each of the plurality of discharge tube segments has started based on the voltage of the discharge tube segment detected by the voltage detecting means, wherein the discharge tube segment start judging means allows all of the plurality of discharge tube segments to start only when the voltages of all of the discharge tube segments of the plurality of discharge tube segments are smaller than a predetermined voltage.

That is, in the first aspect of the invention, the voltages of the discharge tube segments before the start of discharge are used, so whether or not there is any abnormality in the laser gas can be judged before the start of discharge. Further, the discharge tube segments are started when the voltages of all of the discharge tube segments are smaller than the predetermined voltage, that is, all discharge tube segments are in states where no insulation breakdown will occur, so it is possible to prevent damage to the discharge tube due to insulation breakdown.

According to a second aspect of the invention, there is provided the first aspect of the invention wherein the oscillator further comprises a laser gas purifying means for purifying the laser gas in the discharge tube by replacing it, wherein the discharge tube segment start judging means stops the start of all of the plurality of discharge tube segments and the laser gas purifying means purifies the laser gas in the discharge tube when the voltages of all of the discharge tube segments among the plurality of discharge tube segments are the predetermined voltage or more.

That is, in the second aspect of the invention, when the voltages of all of the discharge tube segments are a predetermined voltage or more, that is, when all discharge tube segments may suffer from insulation breakdown, the laser gas can be purified to eliminate impurity molecules from the laser gas.

According to a third aspect of the invention, there is provided the first or second aspect of the invention wherein the discharge tube segment start judging means starts part of the discharge tube segments among the plurality of discharge tube segments for a warmup operation when the voltages of that part of the discharge tube segments are smaller than a predetermined voltage.

A plurality of discharge tube segments of a gas laser oscillator differs in discharge start characteristics due to variations in characteristics of the discharge tube and drive power supplies, so sometimes even when the laser gas has deteriorated, discharge starts by a voltage of the insulation breakdown voltage or less.

Therefore, according to the third aspect of the invention, when the voltages of part of the discharge tube segments are smaller than the predetermined voltage, that is, when part of the discharge tube segments will not suffer from insulation breakdown, a warmup operation may be performed to eliminate impurity molecules from the laser gas. When performing a warmup operation in this way, the impurity molecules can be eliminated in a shorter time than when replacing the laser gas.

According to the fourth aspect of the invention, there is provided the second or third aspect of the invention where after purifying the laser gas or after the warmup operation, the voltage detecting means again detect the voltages of the plurality of discharge tube segments and issue an alarm when the voltages of at least part of the discharge tube segments among the plurality of discharge tube segments is smaller than the predetermined voltage.

That is, in the fourth aspect of the invention, it is possible to issue an alarm so as to caution the operator. Further, by forcibly stopping the gas laser oscillator along with issuing an alarm, it is possible prevent damage to the discharge tube in advance.

According to a fifth aspect of the invention, there is provided the third or fourth aspect of the invention wherein the laser gas pressure and discharge voltage in the discharge tube at the time of the warmup operation are made different from the laser gas pressure and discharge voltage at the time of normal operation of the gas laser oscillator.

That is, in the fifth aspect of the invention, by conducting a warmup operation by a laser gas pressure and discharge voltage different from those at the time of normal operation, the occurrence of insulation breakdown at the discharge tube segments is further prevented. Note that the laser gas pressure and discharge voltage at the time of warmup operation are preferably values smaller than the laser gas pressure and discharge voltage at the time of normal operation. This enables the warmup operation to be performed while avoiding insulation breakdown.

According to the above aspects of the invention, the effect is exhibited that the discharge tube can be prevented from being damaged by judging any abnormality in the laser gas before start of discharge without accompanying work of the operator.

Further, according to the second aspect of the invention, the effect is exhibited that impurity molecules of the laser gas can be exhausted.

Further, according to the third aspect of the invention, the effect is exhibited that performing the warmup operation enables the impurity molecules in the laser gas to be exhausted in a short time.

Further, according to the fourth aspect of the invention, the effect is exhibited that the operator can be cautioned.

Further, according to the fifth aspect of the invention, the effect is exhibited that occurrence of insulation breakdown in the discharge tube segments can be prevented.

### BRIEF DESCRIPTION OF THE DRAWINGS

These and other objects and features of the present invention will become clearer from the following description of the preferred embodiments given with reference to the attached drawings, wherein:
FIG. 1 is a schematic view of a gas laser oscillator according to the present invention;
FIG. 2a is a view of the relationship between an applied voltage and current at the time of start of discharge of a discharge tube;
FIG. 2b is a view of the relationship between an applied voltage and current at the time of start of discharge of a discharge tube;
FIG. 3 is a flow chart of one operation program of the gas laser oscillator of the present invention; and
FIG. 4 is a flow chart of one operation program of the gas laser oscillator of the present invention.

### DETAILED DESCRIPTION

Below, the attached drawings will be referred to so as to explain embodiments of the present invention. In the following drawings, the same members are assigned the same reference numerals. To facilitate understanding, these drawings are suitably changed in scale.

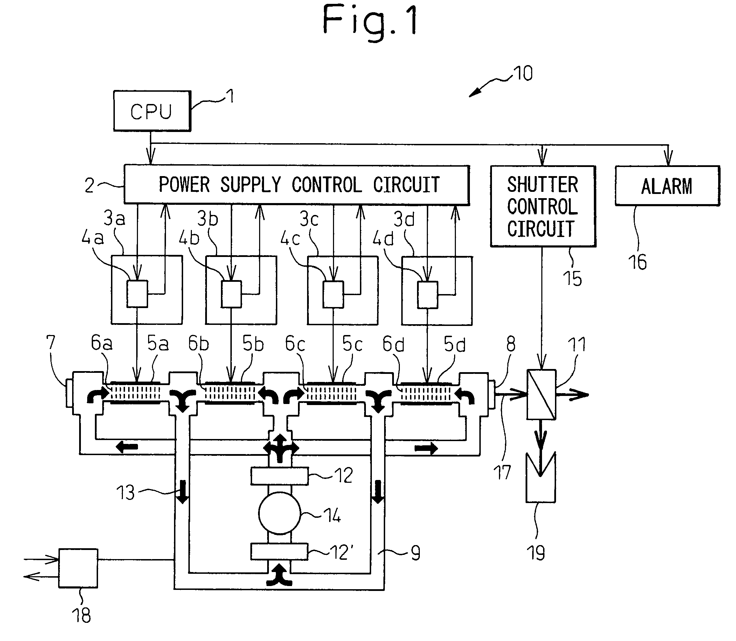

FIG. 1 is a schematic view of a gas laser oscillator according to the present invention. As shown in FIG. 1, the laser oscillator 10 is an induction discharge excitation type of gas laser oscillator and includes discharge tube segments 6a to 6d connected to a laser gas pressure control system 18. The laser gas pressure control system 18 can supply laser gas to the discharge tube segments 6a to 6d and exhaust the laser gas from the discharge tube segments 6a to 6d. As shown in FIG. 1, one end of the laser oscillator 10 is provided with a rear mirror 7 not having partial transmittance (mirror inside resonator), while the other end of the discharge tube 9 is provided with an output mirror 8 having partial transmittance. In this embodiment, the rear mirror 7 is a mirror made of germanium having a reflectance of 99.5% while the output mirror 8 is a zinc-selenium mirror having a reflectance of 65%.

As shown in the drawing, in the optical resonance space between the rear mirror 7 and the output mirror 8, a plurality of discharge tube segments, in FIG. 1, four discharge tube segments 6a to 6d, are arranged substantially in a line. Further, as shown in the drawing, the laser oscillator 10 is provided with a blower 14, for example, a turboblower, which circulates laser gas in blower piping 9 in the arrow direction. Further, the blower is provided upstream and downstream with coolers 12, 12'. The cooler 12' is used for cooling the laser gas 13 raised to a high temperature in the discharge tube segments 6a to 6d, while the cooler 12 is used for removing the heat of combustion caused by the blower 14.

The discharge tube segments 6a to 6d include pairs of discharge electrodes 5a to 5d arranged so as to sandwich the discharge tube segments 6a to 6d. These discharge electrodes 5a to 5d are the same in dimensions and are coated. As shown in FIG. 1, the discharge electrode 5a is connected through an excitation power supply 3a to a power supply control circuit 2. Note that the discharge electrodes 5b to 5d are also connected through the excitation power supplies 3b to 3d to the power supply control circuit 2, respectively. These excitation power supplies 3a to 3d rectify commercial power supplies, then perform switching operations to generate high frequency voltage and supply high frequency currents corresponding to the current instruction to the discharge tube segments 6a to 6d.

The CPU (microprocessor) 1 of the laser oscillator 10 is connected by a two-way bus to the power supply control circuit 2. The power supply control circuit 2 is provided with an A/D converter for converting the signal output from the CPU 1 and outputting it as a current instruction signal. Further, as shown in FIG. 1, the power supply control circuit 2 is connected to applied voltage detection circuits 4a to 4d of the excitation power supplies 3a to 3d. These applied voltage detection circuits 4a to 4d function to detect the values of the voltages applied to the discharge tube segments 6a to 6d, respectively. The applied voltage detection circuits 4a to 4d convert the high frequency high voltages to DC voltages and feed back the monitored values of the applied voltages to the power supply control circuit 2. The power supply control circuit 2 processes the monitored values and, when the applied voltage of the discharge tube becomes a prescribed voltage or more, stops the current instruction to the discharge electrodes 5a to 5d. Note that while not shown in the figures, there are also a read only memory (ROM) and a random access memory (RAM) connected to the CPU 1 by a two-way bus.

As shown in FIG. 1, the CPU 1 has a shutter control circuit 15 connected to it. The shutter control circuit 15 opens and closes a shutter 11 arranged in front of the output mirror 8 based on a command from the CPU 1. The shutter 11 is formed by copper plate plated on its surface with gold. Further, an alarm device 16 issuing an alarm based on a command from the CPU is also connected to the CPU 1.

At the time of operation of the gas laser oscillator, the laser gas pressure control system 18 supplies laser gas to the discharge tube segments 6a to 6d. Next, the blower 14 circulates the laser gas through the circulation path formed by the blower piping 9. As shown by the arrows in FIG. 1, the laser gas blown from the blower 14 passes through a cooler 12' for removing the heat of compression and then is supplied to each of the discharge tube segments 6a to 6d.

When the excitation power supplies 3a to 3d provide the discharge electrodes 5a to 5d of the discharge tube segments 6a to 6d with high frequency voltages of predetermined frequencies and voltages, for example, several hundred kHz to tens of MHz and several hundred volts to tens of kV, the discharge action causes the laser gas to be excited and thereby a laser beam to be generated. Using known principles, the laser beam is amplified in the optical resonance space and a laser beam is taken out through the output mirror 8. As will be understood from FIG. 1, when the shutter control circuit 15 closes the shutter 11, the laser beam 17 output from the output mirror 8 is reflected by the shutter 11 and absorbed to the beam absorber 19. On the other hand, when the shutter 11 is open, the laser beam 17 from the output mirror 8 is output to outside the laser oscillator 10 as it is, for example, to a laser processing machine (not shown). Note that the laser gas made high in temperature due to the discharge action is cooled by the cooler 12 and again returned to the blower 14.

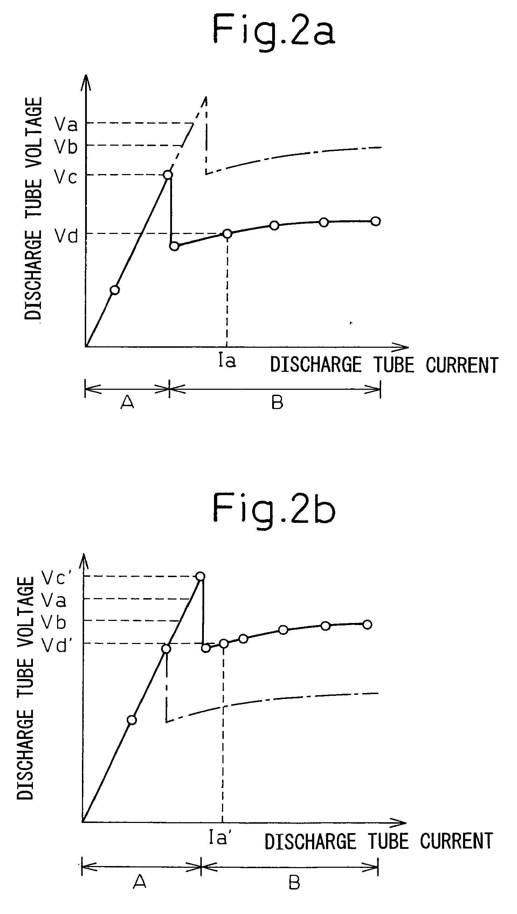

FIG. 2a is a view of the relationship between the applied voltage and current when the discharge tube of the laser oscillator 10 starts discharge in a state with the laser gas normal. In FIG. 2a, the ordinate shows the voltage applied to the discharge tube, while the abscissa shows the current at the discharge tube. Further, the section A shown by the abscissa of the drawing shows the section A before discharge start, while the section B shows the section B after discharge start. Note that to facilitate understanding, the dot-chain line in FIG. 2a shows the actual behavior of the solid line in FIG. 2b explained later.

When the CPU 1 orders a discharge activation operation as shown in FIG. 2a, the discharge tube current I increases. The discharge tube voltage V increases along with a rise in the discharge tube current I. Further, when the discharge tube voltage V becomes the voltage Vc, the discharge starts. As shown in the drawing, when the discharge starts, any change in the equivalent impedance of the discharge tube causes the voltage V to rapidly drop. At the voltage Vd, the discharge start operation is ended. The current I at this time is the current Ia. Note that the voltage Va in FIG. 2a shows the insulation breakdown voltage Va. The voltage Vb shows the prescribed voltage Vb for stopping the start operation so as to prevent insulation breakdown. The prescribed voltage Vb is somewhat lower than the insulation breakdown voltage Va. As shown in FIG. 2a, when the laser gas does not have any abnormalities, the applied voltage of the discharge tube is always in the region smaller than the prescribed voltage Vb. That is both the voltage Vc at the time of discharge start and voltage Vd at the time of end of the discharge start are smaller than the prescribed voltage Vb.

On the other hand, FIG. 2b is a view similar to FIG. 2a showing the relationship between the applied voltage and current when starting the discharge of the discharge tube of the laser oscillator 10 when the laser gas includes any abnormality. The case of the laser gas includes an abnormality as shown in FIG. 2b, for example, means if the gas laser oscillator is stopped for a long time, if the source (tank) of the laser gas supplied to the discharge tube is empty, if the inside of the gas laser oscillator is opened up to the atmosphere, etc. and the lubrication oil of the blower used for making the laser gas flow inside the discharge tube becomes evaporated and is mixed into the laser gas inside the discharge tube, that is, impurity molecules of the lubrication oil etc. become mixed with the laser gas and the laser gas deteriorates.

In the case shown in FIG. 2b, when the CPU 1 instructs a discharge activation operation, the discharge tube current I increases. However, when the laser gas deteriorates, the discharge of the discharge tube segments becomes hard to start, so the voltage Vc' at the time of discharge start in FIG. 2b exceeds the prescribed voltage Vb and insulation breakdown voltage Va. After that, the voltage V similarly rapidly drops. At the voltage Vd', the discharge start operation ends. The current I at this time is the current Ia'. The voltage Vd' at the time of completion of discharge start is considerably larger than the voltage Vd at the time of completion of discharge start in FIG. 2a and exceeds the insulation breakdown voltage Va. Therefore, in such a case, insulation breakdown occurs and the discharge tube, for example, the discharge tube segments 6a to 6d, may be damaged. For this reason, to avoid insulation breakdown, the voltage V has to be made smaller than the insulation breakdown voltage Va, preferably smaller than the prescribed voltage Vb.

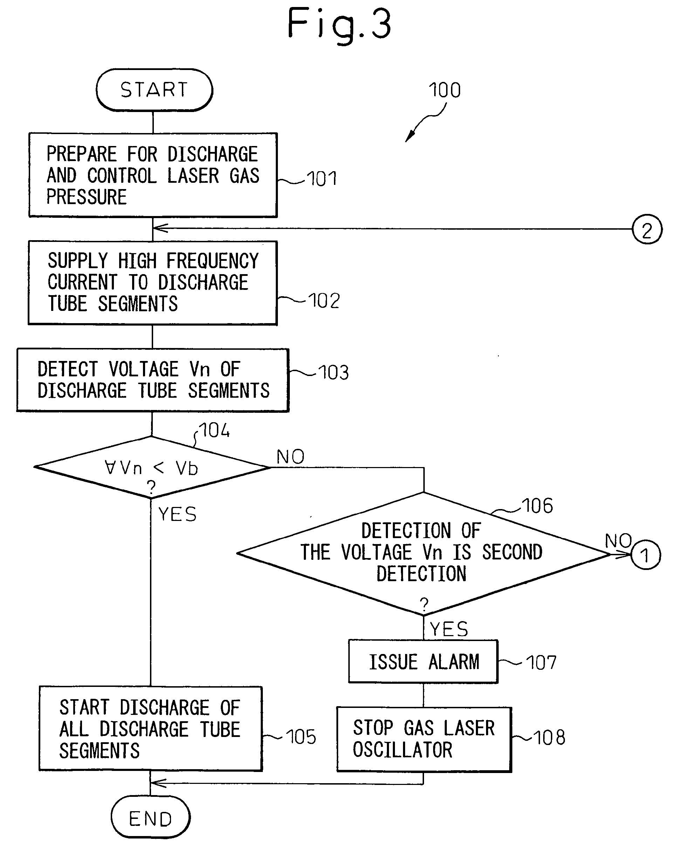

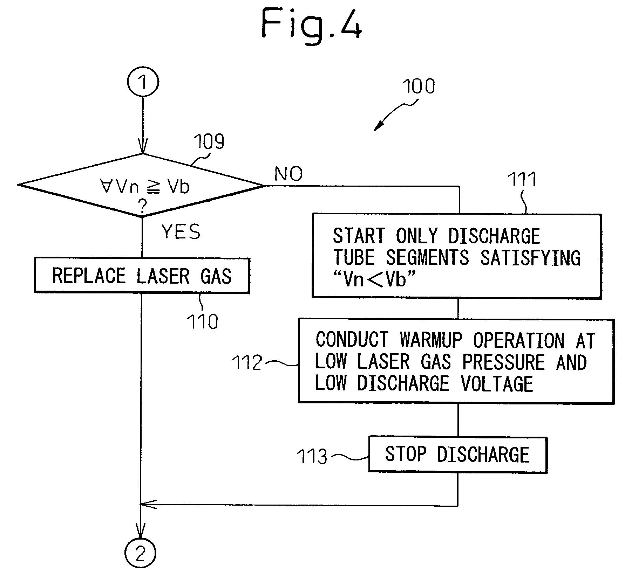

The gas laser oscillator 10 of the present invention utilizes the relationship between the voltage and current shown in FIG. 2a and FIG. 2b and operates so that no insulation breakdown occurs at any of the discharge tube segments 6a to 6d. FIG. 3 and FIG. 4 are flow charts showing one operation program of the gas laser oscillator of the present invention. This program 100 is built into the ROM or RAM of the power supply control circuit 2 in advance and is run by the CPU 1. Before running the program 100, the laser gas pressure in the discharge tube segments 6a to 6d of the gas laser oscillator 10 is substantially equal to the atmospheric pressure and the shutter 11 is closed. Of course, at this point of time, no discharge occurs at the discharge tube segments 6a to 6d.

At step 101 of the program 100, the laser gas pressure control system 18 is used to lower the laser gas pressure in the discharge tube segments 6a to 6d to a predetermined laser gas pressure P0. Next, the blower 14 is driven to cause the laser gas to circulate through the blower piping 9. At step 102, a high frequency current is supplied through the excitation power supplies 3a to 3d to the discharge tube segments 6a to 6d and the current I is gradually increased. Next, at step 103, the applied voltage detection circuits 4a to 4d detect the voltages of the discharge tube segments 6a to 6d. Below, in this specification, the voltage of the discharge tube segment 6a is called the voltage V1, the voltage of the discharge tube segment 6b the voltage V2, the voltage of the discharge tube segment 6c the voltage V3, and the voltage of the discharge tube segment 6d the voltage V4. Further, these voltages V1 to V4 will be referred on a representative basis as the voltage Vn.

Next, at step 104, it is judged if all of the voltages VVn (=V1, V2, V3, V4) of the discharge tube segments 6a to 6d are smaller than a prescribed voltage Vb (see FIG. 2). When it is judged that all of the voltages VVn are smaller than the prescribed voltage Vb, the routine proceeds to step 105. At step 105, since none of the discharge tube segments 6a to 6d exhibits any abnormality, these discharge tube segments 6a to 6d are all started and the processing for starting up the gas laser oscillator 10 is ended. On the other hand, if it is judged that not all of the voltages ∀Vn are smaller than the prescribed voltage Vb, that is, if one or more voltage among the voltages V1 to V4 is not smaller than the prescribed voltage Vb, the routine proceeds to step 106.

At step 106, it is judged if the detection of the voltage Vn at step 103 was the second detection after activation of the gas laser oscillator 10. Further, if it is judged that it was the second detection, it is judged that the later explained laser gas replacement or warmup operation did not eliminate the abnormality in the laser gas, then the routine proceeds to step 107. At step 107, it is judged that an abnormality of the laser gas which cannot be easily resolved has occurred at one or more of the discharge tube segments 6a to 6d and an alarm 16 is issued. Due to this, the operator can be alerted. Next, the routine proceeds to step 108, where the gas laser oscillator 10 is automatically shut down and the processing ended to avoid insulation alerted. Note that at step 106, it is judged whether the voltage was detected twice, but it is possible to change this to three or more times. Further, to simplify the program 100, steps 106 to 108 may be omitted.

When it is judged at step 106 that the detection was not the second detection, the routine proceeds to step 109. At step 109, it is judged if all voltages ∀Vn of the discharge tube segments 6a to 6d are the prescribed voltage Vb or more. When it is judged that all of the voltages VVn are the prescribed voltage Vb or more, the laser gas contains a considerably large amount of impurity molecules, so it is judged that the later explained warmup operation cannot be able to completely eliminate the abnormality of the laser gas and the routine proceeds to step 110. At step 110, the laser gas pressure control system 18 shown in FIG. 1 replaces the laser gas in the discharge tube segments 6a to 6d. That is, in this case, all of the laser gas circulating in the blower piping 9 is exhausted, then new laser gas is filled. Therefore, all impurity molecules which has been mixed in the laser gas in the discharge tube segments 6a to 6d are exhausted together with the laser gas, so after filling the new laser gas, the discharge tube segments 6a to 6d no longer contain any impurity molecules.

When it is judged at step 109 that not all of the voltages VVn of the discharge tube segments 6a to 6d are the prescribed voltage Vb or more, that is, at least one voltage of the voltages V1 to V4 is smaller than the prescribed voltage Vb, the routine proceeds to step 111. At step 111, only the discharge tube segments having voltages satisfying the relationship of "Vn<Vb" among the discharge tube segments 6a to 6d are started.

Next, at step 112, the warmup operation of the gas laser oscillator 10 is started. For the warmup operation, the laser gas pressure P0 is reduced to the pressure P1 (P1<P0). Further, the discharge voltage Vz of the time of the warmup operation is made lower than the discharge voltage Ve of the time of normal operation (Vz<Ve). At step 112, the warmup operation is performed at a low pressure and low discharge voltage for a predetermined time, for example 15 minutes. Due to this, the impurity molecules which had been in existence at the discharge tube segments 6a to 6d are exhausted by the warmup operation. After this, at step 113, the warmup operation and discharge action are stopped.

The variation in characteristics of the plurality of discharge tube segments 6a to 6d and excitation power supplies 3a to 3d mean that the discharge starting characteristics at the discharge tube segments are not constant. Even when the laser gas deteriorates, the discharge sometimes starts by a voltage of the insulation breakdown voltage Va or less, for example, a voltage smaller than even the prescribed voltage Vb. Due to this, at the above-mentioned step 112, the warmup operation is conducted at a pressure and discharge voltage lower than that of the usual case so as to prevent insulation breakdown. Further, when performing the warmup operation, the impurity molecules can be exhausted in a shorter time than when replacing the laser gas.

When the discharge action is stopped at step 113 and the laser gas finishes being replaced at step 110, the routine proceeds to step 102, where the above-mentioned processing is again repeated. When again proceeding to step 102, since the warmup operation has caused some of the impurity molecules in the laser gas to be exhausted or replacement of the laser gas has caused all of the impurity molecules to be exhausted, the possibility rises of it being judged at step 102 that all of the voltages Vn of the discharge tube segments 6a to 6d are smaller than the prescribed voltage Vb. Further, when steps 106 to 108 are not provided, the processing is repeated until it is judged at step 104 that all voltages VVn of the discharge tube segments 6a to 6d are smaller than the prescribed voltage Vb.

In this way, in the present invention, the voltages Vn of the discharge tube segments 6a to 6d before the start of discharge are referred to so as to judge, without accompanying work of the operator, if there is any abnormality in the laser gas in the discharge tube segments 6a to 6d before the start of discharge. Only when none of the discharge tube segments 6a to 6d has any abnormality, the discharges of all of the discharge tube segments 6a to 6d are started. Therefore, it is possible to prevent the discharge tube segments 6a to 6d from being damaged by insulation breakdown which can occur when the laser gas includes some abnormality, that is, when the laser gas includes impurity molecules.

Further, in the present invention, when one or more of the discharge tube segments 6a to 6d has some abnormality, either a warmup operation is conducted or the laser gas is replaced to eliminate the impurity molecules in the laser gas. Due to this, it is possible to eliminate conditions where insulation breakdown might occur. In particular, when only some of the discharge tube segments among the discharge tube segments 6a to 6d are abnormal, only the non abnormal discharge tube segments are started for a warmup operation to eliminate the impurity molecules. Due to this, it is possible to eliminate impurity molecules in a shorter time than when replacing the laser gas. Note that in FIG. 1, four discharge tube segments 6a to 6d are used, but it is clear that even cases where the number of the discharge tube segments are different are included in the scope of the present invention.

While the invention has been described with reference to specific embodiments chosen for purpose of illustration, it should be apparent that numerous modifications could be made thereto by those skilled in the art without departing from the basic concept and scope of the invention.

## Claims

1. A gas laser oscillator (10) **characterized in that** it comprises:
voltage detecting means (4a to 4d) for detecting the voltage of each of a plurality of discharge tube segments (6a to 6d) of a discharge tube before start of discharge and
a discharge tube segment start judging means (1) for judging if each of said plurality of discharge tube segments (6a to 6d) has started based on the voltage of the discharge tube segments (6a to 6d) detected by said voltage detecting means (4a to 4d), wherein
said discharge tube segment start judging means (1) allows all of said plurality of discharge tube segments (6a to 6d) to start only when the voltages of all of the discharge tube segments (6a to 6d) of said plurality of discharge tube segments are smaller than a predetermined voltage (Vb).

2. A gas laser oscillator as set forth in claim 1,
the oscillator further comprises a laser gas purifying means (18) for purifying the laser gas in said discharge tube by replacing it
said discharge tube segment start judging means (1) stops the start of all of said plurality of discharge tube segments (6a to 6d) and said laser gas purifying means (18) purifies the laser gas in said discharge tube when the voltages of all of the discharge tube segments among said plurality of discharge tube segments (6a to 6d) are the predetermined voltage (Vb) or more.

3. A gas laser oscillator as set forth in claim 1, wherein said discharge tube segment start judging means (1) starts part of the discharge tube segments among said plurality of discharge tube segments (6a to 6d) for a warmup operation when the voltages of that part of the discharge tube segments are smaller than a predetermined voltage (Vb).

4. A gas laser oscillator as set forth in claim 2 or 3, wherein after purifying said laser gas or after said warmup operation, said voltage detecting means (4a to 4d) again detect the voltages of said plurality of discharge tube segments (6a to 6d) and issue an alarm when the voltages of at least part of the discharge tube segments among said plurality of discharge tube segments (6a to 6d) is smaller than the predetermined voltage (Vb).

5. A gas laser oscillator as set forth in claim 3 or 4, wherein the laser gas pressure and discharge voltage in said discharge tube at the time of said warmup operation are made different from the laser gas pressure and discharge voltage at the time of normal operation of said gas laser oscillator (10).
